# EUROPEAN PATENT APPLICATION

(11) **EP 3 343 819 A1**
(43) Date of publication of application: **04.07.2018**
(21) Application number: 15904521.0
(22) Date of filing: 25.09.2015
(51) Int. Cl.: H04L 1/06, H04B 7/04, H04W 24/10

(54) **METHOD AND APPARATUS FOR REPORTING CHANNEL STATE INFORMATION AND ELECTRONIC DEVICE**

(71) Applicant: Huawei Technologies Co., Ltd., Longgang District Shenzhen, Guangdong 518129 (CN)
(72) Inventor: LIU, Jianqin, Shenzhen, Guangdong 518129 (CN); ZHANG, Ruiqi, Shenzhen, Guangdong 518129 (CN); LIU, Kunpeng, Shenzhen, Guangdong 518129 (CN)
(74) Representative: Epping - Hermann - Fischer
(86) International application number: PCT/CN2015/090846
(87) International publication number: WO 2017/049645

(57) **Abstract**

Embodiments of the present invention disclose a method and an apparatus for reporting channel state information and an electronic device. The method includes: obtaining to-be-reported channel state information CSI, where the channel state information includes a first part and a second part, the first part includes indication information used for beam selection, and the second part includes information other than the indication information used for beam selection; and reporting the channel state information to a first device in a preset reporting manner, where a manner 1 includes: transmitting the first part on a first channel, and transmitting the second part on a second channel; and a manner 2 includes: transmitting both the first part and the second part on the first channel. In the present invention, reporting of a beam selection indication is implemented in a mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

## Description

### TECHNICAL FIELD

The present invention relates to wireless communications technologies, and in particular, to a method and an apparatus for reporting channel state information and an electronic device.

### BACKGROUND

A MIMO (Multiple-Input Multiple-Output, multiple-input multiple-output) technology has been widely used in a wireless communications system to improve a system capacity and ensure cell coverage. For example, multi-antenna-based transmit diversity, open-loop/closed-loop spatial multiplexing, and DMRS (Demodulation Reference Signal, demodulation reference signal)-based multi-stream transmission are used in a downlink of an LTE (Long Term Evolution, Long Term Evolution) system. DMRS-based multi-stream transmission is a main transmission mode in an LTE-A (LTE-Advanced) system and a subsequent system. A procedure of the DMRS-based multi-stream transmission is as follows: UE (User Equipment, user equipment) first performs channel measurement according to a CSI-RS (CSI: Channel State Information, channel state information; RS: Reference Signal, reference signal) configured by an eNB (evolved Node B, evolved NodeB). A measurement result includes a transmission rank (Rank), a precoding matrix corresponding to the transmission rank, and a CQI (Channel Quality Indicator, channel quality indicator) corresponding to the transmission rank and the precoding (Precoding) matrix. Then, the UE feeds back the measurement result to the eNB. The eNB further performs downlink scheduling according to the measurement result fed back by the UE, and sends, according to a scheduling result, a PDSCH (Physical Downlink Shared Channel, physical downlink shared channel) to the UE by using a DMRS.

In a communications standard such as a current LTE-A Rel-13 standard, mechanisms for CSI reporting and feedback in three-dimensional MIMO may be classified into a mechanism 1 in which a CSI-RS resource is not precoded and a mechanism 2 in which a CSI-RS resource is precoded. In the mechanism 2, to eliminate impact caused by a movement of the UE and improve CSI feedback accuracy, a base station usually sends multiple sets of precoded candidate reference signal resources to the UE for selection and reporting. Different from the mechanism 1 in which only CSI reporting is performed, in the mechanism 2, the UE further needs to perform extra selection on multiple sets of precoded resources, and then reports a beam selection indication to the base station. However, beam selection and reporting are not performed in the mechanism 1, and the mechanism 2 cannot use a solution of the mechanism 1 during implementation. Therefore, in the prior art, there is no effective solution for reporting a beam selection indication in the mechanism 2.

### SUMMARY

Embodiments of the present invention provide a method and an apparatus for reporting channel state information, so as to implement reporting of a beam selection indication in a mechanism 2.

To resolve the foregoing technical problem, the present invention discloses the following technical solutions:

According to a first aspect, a method for reporting channel state information is provided, the method is applied to a second device, and the method includes:
obtaining to-be-reported channel state information CSI, where the channel state information includes a first part and a second part, the first part includes indication information used for beam selection, and the second part includes information other than the indication information used for beam selection in the channel state information; and
reporting the channel state information to a first device in a preset reporting manner, where
the preset reporting manner includes a manner 1 or a manner 2;
the manner 1 includes: transmitting the first part on a first channel, and transmitting the second part on a second channel; and
the manner 2 includes: transmitting both the first part and the second part on the first channel.

With reference to the first aspect, in a first possible implementation of the first aspect, the first channel is a physical uplink shared channel PUSCH, and the second channel is a physical uplink control channel PUCCH.

With reference to the first possible implementation of the first aspect, in a second possible implementation of the first aspect,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

With reference to the second possible implementation of the first aspect, in a third possible implementation of the first aspect, the method further includes:
before the reporting the channel state information in a preset reporting manner,
receiving first indication information sent by the first device, where the first indication information is used to indicate a preset reporting manner of the second device.

With reference to the third possible implementation of the first aspect, in a fourth possible implementation of the first aspect, the first device notifies the second device of the first indication information by using higher-layer signaling or layer-one signaling.

With reference to the fourth possible implementation of the first aspect, in a fifth possible implementation of the first aspect, the layer-one signaling is control signaling, and the control signaling includes an information bit that is used to carry the first indication information.

With reference to the first aspect, in a sixth possible implementation of the first aspect, both the manner 1 and the manner 2 further include:
transmitting second indication information on the first channel, where the second indication information is used to describe a preset reporting manner that is currently used by the second device.

With reference to the first aspect, in a seventh possible implementation of the first aspect, in the manner 1, a reporting period and a subframe offset of the second part on the second channel are determined according to beam selection indication information in the first part.

According to a second aspect, a method for receiving channel state information is provided, the method is applied to a first device, and the method includes:
receiving channel state information CSI that is reported by a second device in a preset reporting manner; and
communicating with the second device according to the channel state information, where
the channel state information includes a first part and a second part, the first part includes indication information used for beam selection, and the second part includes information other than the indication information used for beam selection in the channel state information; and
the preset reporting manner includes a manner 1 or a manner 2;
the manner 1 includes: transmitting the first part on a first channel, and transmitting the second part on a second channel; and
the manner 2 includes: transmitting both the first part and the second part on the first channel.

With reference to the second aspect, in a first possible implementation of the second aspect, the first channel is a physical uplink shared channel PUSCH, and the second channel is a physical uplink control channel PUCCH.

With reference to the first possible implementation of the second aspect, in a second possible implementation of the second aspect,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

With reference to the second aspect, in a third possible implementation of the second aspect, the method further includes:
before the receiving channel state information CSI that is reported by a second device in a preset reporting manner,
sending first indication information to the second device, where the first indication information is used to indicate a preset reporting manner of the second device.

With reference to the third possible implementation of the second aspect, in a fourth possible implementation of the second aspect, the first device notifies the second device of the first indication information by using higher-layer signaling or layer-one signaling.

With reference to the fourth possible implementation of the second aspect, in a fifth possible implementation of the second aspect, the layer-one signaling is control signaling, and the control signaling includes an information bit that is used to carry the first indication information.

With reference to the second aspect, in a sixth possible implementation of the second aspect, both the manner 1 and the manner 2 further include:
transmitting second indication information on the first channel, where the second indication information is used to describe a preset reporting manner that is currently used by the second device.

With reference to the second aspect, in a seventh possible implementation of the second aspect, in the manner 1, a reporting period and a subframe offset of the second part on the second channel are determined according to beam selection indication information in the first part.

According to a third aspect, an apparatus for reporting channel state information is provided, the apparatus is applied to a second device, and the apparatus includes:
a channel state information obtaining module, configured to obtain to-be-reported channel state information CSI, where the channel state information includes a first part and a second part, the first part includes indication information used for beam selection, and the second part includes information other than the indication information used for beam selection in the channel state information; and
a channel state information reporting module, configured to report the channel state information to a first device in a preset reporting manner, where
the preset reporting manner includes a manner 1 or a manner 2;
the manner 1 includes: transmitting the first part on a first channel, and transmitting the second part on a second channel; and
the manner 2 includes: transmitting both the first part and the second part on the first channel.

With reference to the third aspect, in a first possible implementation of the third aspect, the first channel is a physical uplink shared channel PUSCH, and the second channel is a physical uplink control channel PUCCH.

With reference to the first possible implementation of the third aspect, in a second possible implementation of the third aspect,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

With reference to the third aspect, in a third possible implementation of the third aspect, the apparatus further includes:
a first indication information receiving module, configured to receive first indication information sent by the first device, where the first indication information is used to indicate a preset reporting manner of the second device.

With reference to the third possible implementation of the third aspect, in a fourth possible implementation of the third aspect, the first device notifies the second device of the first indication information by using higher-layer signaling or layer-one signaling.

With reference to the fourth possible implementation of the third aspect, in a fifth possible implementation of the third aspect, the layer-one signaling is control signaling, and the control signaling includes an information bit that is used to carry the first indication information.

With reference to the third aspect, in a sixth possible implementation of the third aspect, both the manner 1 and the manner 2 further include:
transmitting second indication information on the first channel, where the second indication information is used to describe a preset reporting manner that is currently used by the second device.

With reference to the third aspect, in a seventh possible implementation of the third aspect, in the manner 1, a reporting period and a subframe offset of the second part on the second channel are determined according to beam selection indication information in the first part.

According to a fourth aspect, an apparatus for receiving channel state information is provided, the apparatus is applied to a first device, and the apparatus includes:
a channel state information receiving module, configured to receive channel state information CSI that is reported by a second device in a preset reporting manner; and
a communications module, configured to communicate with the second device according to the channel state information, where
the channel state information includes a first part and a second part, the first part includes indication information used for beam selection, and the second part includes information other than the indication information used for beam selection in the channel state information; and
the preset reporting manner includes a manner 1 or a manner 2;
the manner 1 includes: transmitting the first part on a first channel, and transmitting the second part on a second channel; and
the manner 2 includes: transmitting both the first part and the second part on the first channel.

With reference to the fourth aspect, in a first possible implementation of the fourth aspect, the first channel is a physical uplink shared channel PUSCH, and the second channel is a physical uplink control channel PUCCH.

With reference to the first possible implementation of the fourth aspect, in a second possible implementation of the fourth aspect,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

With reference to the fourth aspect, in a third possible implementation of the fourth aspect, the apparatus further includes:
a first indication information sending module, configured to send first indication information to the second device, where the first indication information is used to indicate a preset reporting manner of the second device.

With reference to the third possible implementation of the fourth aspect, in a fourth possible implementation of the fourth aspect, the first device notifies the second device of the first indication information by using higher-layer signaling or layer-one signaling.

With reference to the fourth possible implementation of the fourth aspect, in a fifth possible implementation of the fourth aspect, the layer-one signaling is control signaling, and the control signaling includes an information bit that is used to carry the first indication information.

With reference to the fourth aspect, in a sixth possible implementation of the fourth aspect, both the manner 1 and the manner 2 further include:
transmitting second indication information on the first channel, where the second indication information is used to describe a preset reporting manner that is currently used by the second device.

With reference to the fourth aspect, in a seventh possible implementation of the fourth aspect, in the manner 1, a reporting period and a subframe offset of the second part on the second channel are determined according to beam selection indication information in the first part.

According to a fifth aspect, an electronic device is provided, and the electronic device includes a processor, a memory, a transceiver module, and a system bus; the processor, the memory, and the transceiver module are connected by using the system bus, the transceiver module is configured to receive and send a wireless signal, and the memory is configured to store an instruction that can be executed by the processor; and
the processor is configured to:
obtain to-be-reported channel state information CSI, where the channel state information includes a first part and a second part, the first part includes indication information used for beam selection, and the second part includes information other than the indication information used for beam selection in the channel state information; and
report the channel state information to a first device in a preset reporting manner, where
the preset reporting manner includes a manner 1 or a manner 2;
the manner 1 includes: transmitting the first part on a first channel, and transmitting the second part on a second channel; and
the manner 2 includes: transmitting both the first part and the second part on the first channel.

To resolve the foregoing technical problem, the present invention discloses the following technical solutions:

In the embodiments of the present invention, the beam selection indication is transmitted on the first channel such as a PUSCH, the reporting of a beam selection indication is implemented in the mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a flowchart of a method for reporting channel state information according to an embodiment of the present invention;
FIG. 2 is a flowchart of a method for reporting channel state information according to an embodiment of the present invention;
FIG. 3 is a flowchart of a method for reporting channel state information according to an embodiment of the present invention;
FIG. 4 is a flowchart of a method for reporting channel state information according to an embodiment of the present invention;
FIG. 5 is a block diagram of an apparatus for reporting channel state information according to an embodiment of the present invention;
FIG. 6 is a block diagram of an apparatus for reporting channel state information according to an embodiment of the present invention;
FIG. 7 is a block diagram of an apparatus for reporting channel state information according to an embodiment of the present invention;
FIG. 8 is a block diagram of an apparatus for reporting channel state information according to an embodiment of the present invention; and
FIG. 9 is a schematic diagram of an electronic device according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

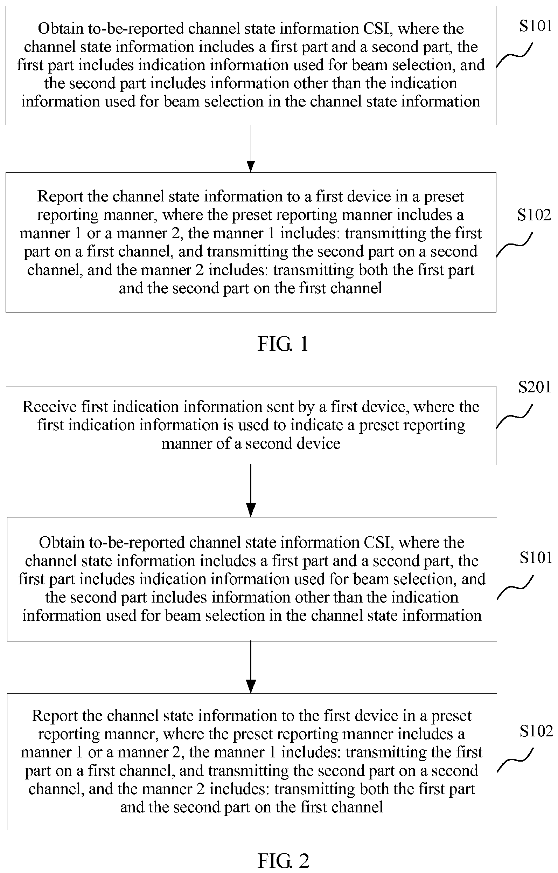

FIG. 1 is a flowchart of a method for reporting channel state information according to an embodiment of the present invention. The method may be applied to a second device. For example, the second device may be a user terminal such as a mobile phone or a tablet computer.

As shown in FIG. 1, the method may include:
Step S101: Obtain to-be-reported channel state information CSI, where the channel state information includes a first part and a second part, the first part includes indication information used for beam selection, and the second part includes information other than the indication information used for beam selection in the channel state information.
Step S102: Report the channel state information to a first device in a preset reporting manner.

The preset reporting manner includes a manner 1 or a manner 2.

The manner 1 includes: transmitting the first part on a first channel, and transmitting the second part on a second channel.

The manner 2 includes: transmitting both the first part and the second part on the first channel.

In an example, the first channel is a PUSCH (Physical Uplink Shared Channel, physical uplink shared channel), and the second channel is a PUCCH (Physical Uplink Control Channel, physical uplink control channel).

In this embodiment, the to-be-reported channel state information is first divided into two parts. The first part includes indication information used for beam selection, and the second part includes information such as a CQI (Channel Quality Indicator, channel quality indicator), an RI (Rank Indicator, rank indicator), and a PTI (Precoding Type Indicator, precoding type indicator), other than the indication information used for beam selection in the channel state information.

Then, the second device may select one manner from the manner 1 and the manner 2 to report the channel state information. In an example, the second device may autonomously select one manner, or may select one manner according to an indication of the first device.

In an example, in the manner 1, a reporting amount used for a beam selection indication, such as a beam selection indication in a bit stream format or a beam selection indication in a precoding matrix format, may be transmitted on the PUSCH in a manner of joint transmission of the PUSCH and the PUCCH during reporting. Channel state information other than the beam selection indication, for example, the channel state information such as the CQI, the RI, and the PTI, is transmitted on the PUCCH. Based on a combination of report information of the beam selection indication on the PUSCH and report information of the other channel state information on the PUCCH, a base station obtains complete channel state information.

In this embodiment or some other embodiments of the present invention,
for the manner 1, a transport format or a coding format of the second part uses a transport format or a coding format of a channel quality indicator CQI transmitted on a PUSCH in a 3rd Generation Partnership Project 3GPP Long Term Evolution LTE standard. For example, the transport format of the channel quality indicator CQI may include a mapping manner of the CQI on the PUSCH.

Reporting of the channel state information on the PUCCH may use an existing PUCCH report type and mode in a current standard. For example, all PUCCH report modes such as PUCCH 1-0, 1-1, 2-0, and 2-1 can be used. However, a report format or a coding format used for a beam selection indication on the PUSCH may reuse a PUSCH report format or coding format of the CQI in a current LTE standard.

For the manner 2, both the first part and the second part may be transmitted on the PUSCH. Higher-layer signaling or layer-one dynamic signaling is used to indicate whether the channel state information transmitted on the PUSCH is transmitted in the manner 1 in which only the first part of the channel state information is included or in the manner 2 in which both the first part and the second part of the channel state information are included. Alternatively, an indication field is added to a specific PUSCH report mode, and the indication field is used to indicate whether the report mode is the manner 1 or the manner 2.

As shown in FIG. 2, in this embodiment or some other embodiments of the present invention, the method further includes:
before the reporting the channel state information in a preset reporting manner,
Step S201: Receive first indication information sent by the first device, where the first indication information is used to indicate a preset reporting manner of the second device.

For example, a base station that is used as the first device instructs, by using the first indication information, the second device to perform reporting in the manner 1, and the second device such as UE performs reporting in the manner 1.

In this embodiment or some other embodiments of the present invention, the first device notifies the second device of the first indication information by using higher-layer signaling or layer-one signaling.

Optionally, the layer-one signaling is control signaling, and the control signaling includes an information bit that is used to carry the first indication information.

Reporting of a beam selection indication on the PUSCH may be triggered by the higher-layer signaling such as RRC (Radio Resource Control, radio resource control) signaling, or the layer-one dynamic signaling such as DCI (Downlink Control Information, downlink control information) signaling. Optionally, when the reporting of a beam selection indication on the PUSCH is used, a trigger field (an information bit) of one bit used for reporting a beam selection indication may be added to DCI, and this is similar to a current trigger manner of aperiodic PUSCH reporting. When the trigger field is set to 1, the reporting of a beam selection indication on the PUSCH is triggered, and when the trigger field is set to 0, the reporting of a beam selection indication on the PUSCH is not triggered.

In addition, the second device may also autonomously determine whether to use the manner 1 or the manner 2 to perform reporting, and notify the first device of the reporting manner. Therefore, in this embodiment or some other embodiments of the present invention, both the manner 1 and the manner 2 further include:
transmitting second indication information on the first channel, where the second indication information is used to describe a preset reporting manner that is currently used by the second device.

A report type indicator field may be added to a PUSCH report mode, for example, an RTI (Report Type Indicator) field of one bit is added. The field is used to indicate whether current PUSCH reporting is in the manner 1 or the manner 2. Optionally, when the RTI is 0, the report type is the manner 1 of PUSCH reporting; and when the RTI is 1, the report type is the manner 2 of PUSCH reporting.

In this embodiment or some other embodiments of the present invention, in the manner 1, a reporting period and a subframe offset of the second part on the second channel are determined according to beam selection indication information in the first part. For example, the reporting period or the subframe offset is an integer multiple of a quantity of candidate beams used for beam selection.

In a mechanism 2, when a user is configured to support reporting of multiple pieces of CSI for multiple candidate beams, a current PUCCH CSI report format needs to be correspondingly extended, to support joint reporting of multiple sets of CSI. Setting of a reporting period, a reporting sub frame offset, and the like of the multiple pieces of CSI is related to the quantity of candidate beams used for bean selection. Optionally, the reporting period of the multiple pieces of CSI is an integer multiple of a reporting period of one piece of CSI in a current standard.

In addition, for some new Rel-13 users who use a PUCCH report mode, reporting of a beam selection indication does not need to be performed in some scenarios, and therefore, CSI reporting includes only second report information that is correspondingly transmitted on the PUCCH. In this case, the base station needs to notify, by using the higher-layer signaling or other layer-one signaling, the user whether a CSI report mode is a manner of joint reporting and transmission of the PUSCH and the PUCCH or a manner of reporting and transmission of only the PUCCH.

In this embodiment, the beam selection indication is transmitted on the first channel such as a PUSCH, the reporting of a beam selection indication is implemented in the mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

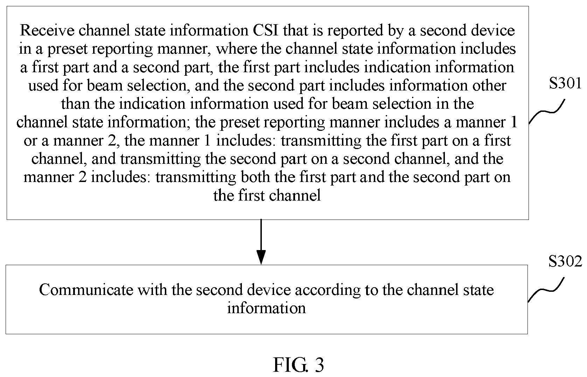

FIG. 3 is a flowchart of a method for reporting channel state information according to an embodiment of the present invention. The method may be applied to a first device. For example, the first device may be a base station or the like.

As shown in FIG. 3, the method may include:
Step S301: Receive channel state information CSI that is reported by a second device in a preset reporting manner.

The channel state information includes a first part and a second part, the first part includes indication information used for beam selection, and the second part includes information other than the indication information used for beam selection in the channel state information.

The preset reporting manner includes a manner 1 or a manner 2.

The manner 1 includes: transmitting the first part on a first channel, and transmitting the second part on a second channel.

The manner 2 includes: transmitting both the first part and the second part on the first channel.

Step S302: Communicate with the second device according to the channel state information.

In this embodiment or some other embodiments of the present invention, the first channel is a physical uplink shared channel PUSCH, and the second channel is a physical uplink control channel PUCCH.

In this embodiment or some other embodiments of the present invention,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

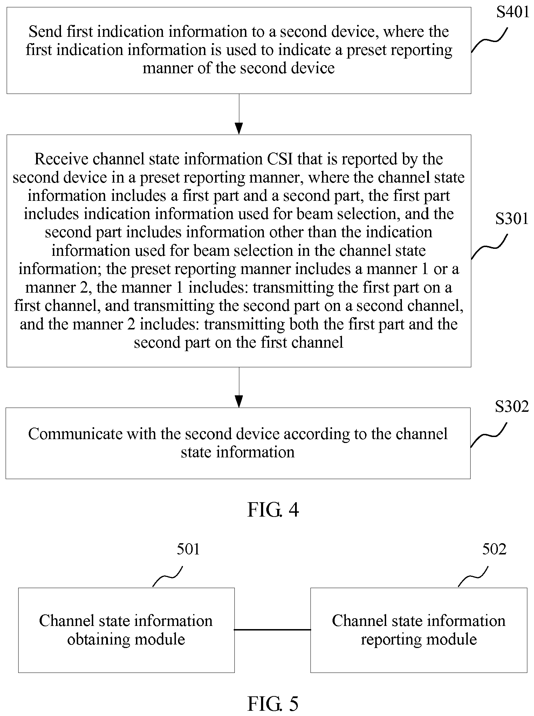

As shown in FIG. 4, in this embodiment or some other embodiments of the present invention, the method may further include:
before the receiving channel state information CSI that is reported by a second device in a preset reporting manner,
Step S401: Send first indication information to the second device, where the first indication information is used to indicate a preset reporting manner of the second device.

In this embodiment or some other embodiments of the present invention, the first device notifies the second device of the first indication information by using higher-layer signaling or layer-one signaling.

In this embodiment or some other embodiments of the present invention, the layer-one signaling is control signaling, and the control signaling includes an information bit that is used to carry the first indication information.

In this embodiment or some other embodiments of the present invention, both the manner 1 and the manner 2 may further include:
transmitting second indication information on the first channel, where the second indication information is used to describe a preset reporting manner that is currently used by the second device.

In this embodiment or some other embodiments of the present invention, in the manner 1, a reporting period and a subframe offset of the second part on the second channel are determined according to beam selection indication information in the first part.

In this embodiment, a beam selection indication is transmitted on the first channel such as a PUSCH, reporting of a beam selection indication is implemented in a mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

The following is an apparatus embodiment of the present invention, and the apparatus embodiment may be used to execute the method embodiment of the present invention. For details not disclosed in the apparatus embodiment of the present invention, refer to the method embodiment of the present invention.

FIG. 5 is a block diagram of an apparatus for reporting channel state information according to an embodiment of the present invention. The apparatus may be applied to a second device. For example, the second device may be a user terminal such as a mobile phone or a tablet computer.

As shown in FIG. 5, the apparatus may include:
a channel state information obtaining module 501, configured to obtain to-be-reported channel state information CSI, where the channel state information includes a first part and a second part, the first part includes indication information used for beam selection, and the second part includes information other than the indication information used for beam selection in the channel state information; and
a channel state information reporting module 502, configured to report the channel state information to a first device in a preset reporting manner.

The preset reporting manner includes a manner 1 or a manner 2.

The manner 1 includes: transmitting the first part on a first channel, and transmitting the second part on a second channel.

The manner 2 includes: transmitting both the first part and the second part on the first channel.

In this embodiment or some other embodiments of the present invention, the first channel is a physical uplink shared channel PUSCH, and the second channel is a physical uplink control channel PUCCH.

In this embodiment or some other embodiments of the present invention,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

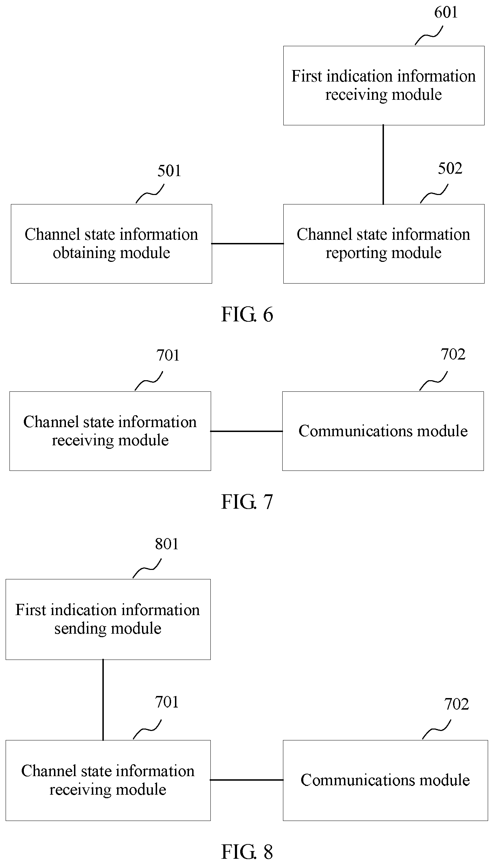

As shown in FIG. 6, in this embodiment or some other embodiments of the present invention, the apparatus may further include:
a first indication information receiving module 601, configured to receive first indication information sent by the first device, where the first indication information is used to indicate a preset reporting manner of the second device.

In this embodiment or some other embodiments of the present invention, the first device notifies the second device of the first indication information by using higher-layer signaling or layer-one signaling.

In this embodiment or some other embodiments of the present invention, the layer-one signaling is control signaling, and the control signaling includes an information bit that is used to carry the first indication information.

In this embodiment or some other embodiments of the present invention, both the manner 1 and the manner 2 further include:
transmitting second indication information on the first channel, where the second indication information is used to describe a preset reporting manner that is currently used by the second device.

In this embodiment or some other embodiments of the present invention, in the manner 1, a reporting period and a subframe offset of the second part on the second channel are determined according to beam selection indication information in the first part.

In this embodiment, a beam selection indication is transmitted on the first channel such as a PUSCH, reporting of a beam selection indication is implemented in a mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

For the apparatus in the embodiment, a specific manner in which each module executes an operation has been described in detail in the related method embodiment, and details are not described herein.

FIG. 7 is a block diagram of an apparatus for reporting channel state information according to an embodiment of the present invention. The apparatus may be applied to a first device. For example, the first device may be a base station or the like.

As shown in FIG. 7, the apparatus may include:
a channel state information receiving module 701, configured to receive channel state information CSI that is reported by a second device in a preset reporting manner; and
a communications module 702, configured to communicate with the second device according to the channel state information.

The channel state information includes a first part and a second part, the first part includes indication information used for beam selection, and the second part includes information other than the indication information used for beam selection in the channel state information.

The preset reporting manner includes a manner 1 or a manner 2.

The manner 1 includes: transmitting the first part on a first channel, and transmitting the second part on a second channel.

The manner 2 includes: transmitting both the first part and the second part on the first channel.

In this embodiment or some other embodiments of the present invention, the first channel is a physical uplink shared channel PUSCH, and the second channel is a physical uplink control channel PUCCH.

In this embodiment or some other embodiments of the present invention,
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

As shown in FIG. 8, in this embodiment or some other embodiments of the present invention, the apparatus may further include:
a first indication information sending module 801, configured to send first indication information to the second device, where the first indication information is used to indicate a preset reporting manner of the second device.

In this embodiment or some other embodiments of the present invention, the first device notifies the second device of the first indication information by using higher-layer signaling or layer-one signaling.

In this embodiment or some other embodiments of the present invention, the layer-one signaling is control signaling, and the control signaling includes an information bit that is used to carry the first indication information.

In this embodiment or some other embodiments of the present invention, both the manner 1 and the manner 2 further include:
transmitting second indication information on the first channel, where the second indication information is used to describe a preset reporting manner that is currently used by the second device.

In this embodiment or some other embodiments of the present invention, in the manner 1, a reporting period and a subframe offset of the second part on the second channel are determined according to beam selection indication information in the first part.

In this embodiment, a beam selection indication is transmitted on the first channel such as a PUSCH, reporting of a beam selection indication is implemented in a mechanism 2, and a new format of a PUCCH or a PUSCH does not need to be designed. Further, performance of transmitting the CSI on the PUSCH is relatively good, a modification to a standard is small, and a degree of freedom in base station configuration and implementation is great, so that transmission performance is improved.

For the apparatus in the embodiment, a specific manner in which each module executes an operation has been described in detail in the related method embodiment, and details are not described herein.

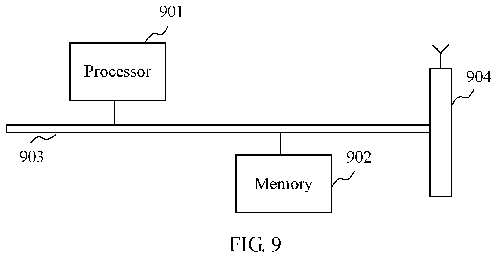

FIG. 9 is a schematic diagram of an electronic device according to an embodiment of the present invention. For example, the electronic device may be a user terminal such as a mobile phone or a tablet computer.

As shown in FIG. 9, the electronic device includes a processor 901, a memory 902, a transceiver module 903, and a system bus 904. The processor 901, the memory 902, and the transceiver module 903 are connected by using the system bus 904. The transceiver module 903 is configured to receive and send a wireless signal, and the memory 902 is configured to store an instruction that can be executed by the processor 901.

The processor 901 is configured to:
obtain to-be-reported channel state information CSI, where the channel state information includes a first part and a second part, the first part includes indication information used for beam selection, and the second part includes information other than the indication information used for beam selection in the channel state information; and
report the channel state information to a first device in a preset reporting manner.

The preset reporting manner includes a manner 1 or a manner 2.

The manner 1 includes: transmitting the first part on a first channel, and transmitting the second part on a second channel.

The manner 2 includes: transmitting both the first part and the second part on the first channel.

The present invention can be described in the general context of executable computer instructions executed by a computer, for example, a program module. Generally, the program module includes a routine, program, object, component, data structure, and the like for executing a particular task or implementing a particular abstract data type. The present invention may also be practiced in distributed computing environments in which tasks are performed by remote processing devices that are connected through a communications network. In a distributed computing environment, program modules may be located in both local and remote computer storage media including storage devices.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

The foregoing descriptions are merely specific implementations of the present invention. It should be noted that a person of ordinary skill in the art may make several improvements or polishing without departing from the principle of the present invention and the improvements or polishing shall fall within the protection scope of the present invention.

## Claims

1. A method for reporting channel state information, wherein the method is applied to a second device, and the method comprises:
obtaining to-be-reported channel state information CSI, wherein the channel state information comprises a first part and a second part, the first part comprises indication information used for beam selection, and the second part comprises information other than the indication information used for beam selection in the channel state information; and
reporting the channel state information to a first device in a preset reporting manner, wherein
the preset reporting manner comprises a manner 1 or a manner 2;
the manner 1 comprises: transmitting the first part on a first channel, and transmitting the second part on a second channel; and
the manner 2 comprises: transmitting both the first part and the second part on the first channel.

2. The method according to claim 1, wherein the first channel is a physical uplink shared channel PUSCH, and the second channel is a physical uplink control channel PUCCH.

3. The method according to claim 2, wherein
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

4. The method according to claim 1, wherein the method further comprises:
before the reporting the channel state information in a preset reporting manner,
receiving first indication information sent by the first device, wherein the first indication information is used to indicate a preset reporting manner of the second device.

5. The method according to claim 4, wherein the first device notifies the second device of the first indication information by using higher-layer signaling or layer-one signaling.

6. The method according to claim 5, wherein the layer-one signaling is control signaling, and the control signaling comprises an information bit that is used to carry the first indication information.

7. The method according to claim 1, wherein both the manner 1 and the manner 2 further comprise:
transmitting second indication information on the first channel, wherein the second indication information is used to describe a preset reporting manner that is currently used by the second device.

8. The method according to claim 1, wherein in the manner 1, a reporting period and a subframe offset of the second part on the second channel are determined according to beam selection indication information in the first part.

9. A method for receiving channel state information, wherein the method is applied to a first device, and the method comprises:
receiving channel state information CSI that is reported by a second device in a preset reporting manner; and
communicating with the second device according to the channel state information, wherein
the channel state information comprises a first part and a second part, the first part comprises indication information used for beam selection, and the second part comprises information other than the indication information used for beam selection in the channel state information; and
the preset reporting manner comprises a manner 1 or a manner 2;
the manner 1 comprises: transmitting the first part on a first channel, and transmitting the second part on a second channel; and
the manner 2 comprises: transmitting both the first part and the second part on the first channel.

10. The method according to claim 9, wherein the first channel is a physical uplink shared channel PUSCH, and the second channel is a physical uplink control channel PUCCH.

11. The method according to claim 10, wherein
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

12. The method according to claim 9, wherein the method further comprises:
before the receiving channel state information CSI that is reported by a second device in a preset reporting manner,
sending first indication information to the second device, wherein the first indication information is used to indicate a preset reporting manner of the second device.

13. The method according to claim 12, wherein the first device notifies the second device of the first indication information by using higher-layer signaling or layer-one signaling.

14. The method according to claim 13, wherein the layer-one signaling is control signaling, and the control signaling comprises an information bit that is used to carry the first indication information.

15. The method according to claim 9, wherein both the manner 1 and the manner 2 further comprise:
transmitting second indication information on the first channel, wherein the second indication information is used to describe a preset reporting manner that is currently used by the second device.

16. The method according to claim 9, wherein in the manner 1, a reporting period and a subframe offset of the second part on the second channel are determined according to beam selection indication information in the first part.

17. An apparatus for reporting channel state information, wherein the apparatus is applied to a second device, and the apparatus comprises:
a channel state information obtaining module, configured to obtain to-be-reported channel state information CSI, wherein the channel state information comprises a first part and a second part, the first part comprises indication information used for beam selection, and the second part comprises information other than the indication information used for beam selection in the channel state information; and
a channel state information reporting module, configured to report the channel state information to a first device in a preset reporting manner, wherein
the preset reporting manner comprises a manner 1 or a manner 2;
the manner 1 comprises: transmitting the first part on a first channel, and transmitting the second part on a second channel; and
the manner 2 comprises: transmitting both the first part and the second part on the first channel.

18. The apparatus according to claim 17, wherein the first channel is a physical uplink shared channel PUSCH, and the second channel is a physical uplink control channel PUCCH.

19. The apparatus according to claim 18, wherein
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

20. The apparatus according to claim 17, wherein the apparatus further comprises:
a first indication information receiving module, configured to receive first indication information sent by the first device, wherein the first indication information is used to indicate a preset reporting manner of the second device.

21. The apparatus according to claim 20, wherein the first device notifies the second device of the first indication information by using higher-layer signaling or layer-one signaling.

22. The apparatus according to claim 21, wherein the layer-one signaling is control signaling, and the control signaling comprises an information bit that is used to carry the first indication information.

23. The apparatus according to claim 17, wherein both the manner 1 and the manner 2 further comprise:
transmitting second indication information on the first channel, wherein the second indication information is used to describe a preset reporting manner that is currently used by the second device.

24. The apparatus according to claim 17, wherein in the manner 1, a reporting period and a subframe offset of the second part on the second channel are determined according to beam selection indication information in the first part.

25. An apparatus for receiving channel state information, wherein the apparatus is applied to a first device, and the apparatus comprises:
a channel state information receiving module, configured to receive channel state information CSI that is reported by a second device in a preset reporting manner; and
a communications module, configured to communicate with the second device according to the channel state information, wherein
the channel state information comprises a first part and a second part, the first part comprises indication information used for beam selection, and the second part comprises information other than the indication information used for beam selection in the channel state information; and
the preset reporting manner comprises a manner 1 or a manner 2;
the manner 1 comprises: transmitting the first part on a first channel, and transmitting the second part on a second channel; and
the manner 2 comprises: transmitting both the first part and the second part on the first channel.

26. The apparatus according to claim 25, wherein the first channel is a physical uplink shared channel PUSCH, and the second channel is a physical uplink control channel PUCCH.

27. The apparatus according to claim 26, wherein
for the manner 1, a transport format or a coding format of the second part uses a transport format or a coding format of a channel quality indicator CQI transmitted on a PUSCH in a 3rd Generation Partnership Project 3GPP Long Term Evolution LTE standard.

28. The apparatus according to claim 25, wherein the apparatus further comprises:
a first indication information sending module, configured to send first indication information to the second device, wherein the first indication information is used to indicate a preset reporting manner of the second device.

29. The apparatus according to claim 28, wherein the first device notifies the second device of the first indication information by using higher-layer signaling or layer-one signaling.

30. The apparatus according to claim 29, wherein the layer-one signaling is control signaling, and the control signaling comprises an information bit that is used to carry the first indication information.

31. The apparatus according to claim 25, wherein both the manner 1 and the manner 2 further comprise:
transmitting second indication information on the first channel, wherein the second indication information is used to describe a preset reporting manner that is currently used by the second device.

32. The apparatus according to claim 25, wherein in the manner 1, a reporting period and a subframe offset of the second part on the second channel are determined according to beam selection indication information in the first part.

33. An electronic device, wherein the electronic device comprises a processor, a memory, a transceiver module, and a system bus; the processor, the memory, and the transceiver module are connected by using the system bus, the transceiver module is configured to receive and send a wireless signal, and the memory is configured to store an instruction that can be executed by the processor; and
the processor is configured to:
obtain to-be-reported channel state information CSI, wherein the channel state information comprises a first part and a second part, the first part comprises indication information used for beam selection, and the second part comprises information other than the indication information used for beam selection in the channel state information; and
report the channel state information to a first device in a preset reporting manner, wherein
the preset reporting manner comprises a manner 1 or a manner 2;
the manner 1 comprises: transmitting the first part on a first channel, and transmitting the second part on a second channel; and
the manner 2 comprises: transmitting both the first part and the second part on the first channel.
